(19) Europäisches Patentamt
European Patent Office
Office européen des brevets

(11) Veröffentlichungsnummer: 0 166 321
B1

(12) **EUROPÄISCHE PATENTSCHRIFT**

(45) Veröffentlichungstag der Patentschrift: **08.08.90**

(21) Anmeldenummer: **85107352.8**

(22) Anmeldetag: **13.06.85**

(51) Int. Cl.⁵: **C 08 K 5/18,** C 08 K 5/41, C 08 K 5/13, C 08 L 77/00

# (54) Hydrophobe Polyamide.

(30) Priorität: **23.06.84 DE 3423291**

(43) Veröffentlichungstag der Anmeldung: **02.01.86 Patentblatt 86/01**

(45) Bekanntmachung des Hinweises auf die Patenterteilung: **08.08.90 Patentblatt 90/32**

(84) Benannte Vertragsstaaten: **DE FR GB IT NL SE**

(56) Entgegenhaltungen:
**US-A-2 278 350**
**US-A-3 595 816**

(73) Patentinhaber: **BAYER AG**
**D-5090 Leverkusen 1 Bayerwerk (DE)**

(72) Erfinder: **Schultz, Klaus-Dieter, Dr.**
**Kreuzbergstrasse 53**
**D-4150 Krefeld (DE)**
Erfinder: **Meyer, Rolf-Volker, Dr.**
**Buchheimer Strasse 23**
**D-4150 Krefeld (DE)**
Erfinder: **Dhein, Rolf, Dr.**
**Deswatinesstrasse 30**
**D-4150 Krefeld 1 (DE)**
Erfinder: **Füllmann, Heinz-Josef, Dr.**
**Am Schneeberg 31**
**D-5653 Leichlingen 2 (DE)**
Erfinder: **Michael, Dietrich, Dr.**
**Deswatinesstrasse 57**
**D-4150 Krefeld (DE)**

**EP 0 166 321 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der Erfindung sind thermoplastisch verarbeitbare Polyamide, die spezielle aromatische Amine in Kombination mit ausgewählten phenolischen Verbindungen enthalten.

Das bekannte hochwertige Eigenschaftsniveau der thermoplastisch verarbeitbaren Polyamide hängt wesentlich von den zwischen verschiedenen Carbonamidgruppen wirksamen Wasserstoffbrücken ab. Auch die durch die Polarität der Carbonamidgruppen bedingte Hydrophilie hat darauf einen großen Einfluß, da sie eine deutlich meßbare Wasseraufnahme sowohl bei Wasserlagerung als auch in Normklima (siehe z.B. Kunststoffhandbuch Band VI, Polyamide, Carl-Hanser-Verlag, München 1966, S. 458 ff) verursacht.

So hängt z.B. die Schlagzähigkeit von Formkörpern aus Polyamiden erheblich vom Wassergehalt der Formkörper ab. Im wasserfreien Zustand, z.B. nach der Herstellung der Formkörper durch Spritzgießen, sind besonders die aus leicht fließenden und damit leicht verarbeitbaren Polyamiden mit mittleren Molekulargewichten hergestellten Formkörper relativ empfindlich gegen Schlagbeanspruchung. Dies gilt besonders für Formkörper aus teilkristallinen Polyamiden.

Durch das Konditionieren mit Wasser kann die Zähigkeit dieser Formkörper deutlich verbessert werden. Es tritt jedoch parallel dazu eine Weichmachung der Produkte ein, die besonders deutlich durch eine drastische Verminderung der Steifigkeit, gemessen durch den E-Modul, zu beobachten ist.

Für viele Einsatzgebiete, insbesondere für Funktions- und Karosserieteile im Automobilsektor, ist jedoch eine hohe Steifigkeit und ausreichende Zähigkeit der Formteile notwendig.

Da die Wasseraufnahme bei Polyamiden auch von deren Kristallinität abhängt, kann diese in geringem Maße durch kristallisationsfördernde Zusätze und durch geeignete Nachbehandlung (z.B. Tempern) beeinflußt werden. Eine entscheidende Veränderung der Wasseraufnahme kann dadurch bei teilkristallinen Polyamiden, wie z.B. PA-6,6, aber nicht erreicht werden.

Es sind eine Reihe von Verfahrensweisen bekannt geworden, die Zähigkeit von Polyamiden auch im spritzfrischen Zustand, d.h. ohne den zähigkeitsfördernden Einfluß des Wassers, zu verbessern. Dies gelingt z.B. durch Zumischen von bestimmten elastomeren Polymeren. So wurden u.a. Polyethylene, Copolymerisate des Ethylens mit polaren Comonomeren wie Vinylacetat, (Meth)acrylsäure(ester) als zähigkeitsverbessernde Zusätze vorgeschlagen oder geeigenete modifizierte Kautschuke wie z.B. Copolymere aus Butadien und Acrylnitril.

In all diesen Fällen wird eine Verbesserung der Zähigkeit der Produkte erzielt. Da aber die Neigung des in der Regel als Hauptkomponente vorliegenden Polyamids zu einer Wasseraufnahme bis zu 10% unverändert erhalten bleibt, verschlechtert die unvermeidbare, sehr hohe Wasseraufnahme zusätzlich die durch den polymeren Zähigkeitsmodifikator bereits verminderte Steifigkeit meist noch so stark, daß die Produkte für technische Teile mit hohen Ansprüchen an Steifigkeit, Zähigkeit und Dimenionsstabilität völlig ungeeignet sind.

Bei Polyamiden aus langkettigen amidbildenden Bausteinen, d.h. bei Produkten mit geringeren Konzentrationen an COHN-Gruppen in den Polymerketten wird zwar deutlich weniger Wasser aufgenommen und der entsprechenden Einfluß auf die mechanischen Eigenschaften ist geringer, aber die Produkte weisen für viele Anwendungen eine zu geringe Wärmeformbeständigkeit und Steifigkeit auf; sie sind darüber hinaus wegen des hohen Preises der Ausgangsstoffe kostspielig.

Es besteht somit ein Bedarf an Polyamiden, die auch nach Konditionierung eine hohe Wärmeformbeständigkeit, hohe Steifigkeit, befriedigende Zähigkeit und gegenüber PA-6 bzw. PA-6,6 verbesserte Dimensionsstabilität besitzen.

Überraschend wurde nunmehr gefunden, daß man die Wasseraufnahme von teilkristallinen Polyamiden senken und Polyamide mit der angegebenen Eigenschaftskombination erreichen kann, wenn man die Polyamide mit ausgewählten, höhermolekularen aromatischen (Poly)aminen in Kombination mit ausgewählten phenolischen Verbindungen modifiziert.

Die Verwendung einer Vielzahl von aromatischen Aminen und Diaminen als Wärmestabilisatoren für Polyamide wurde bereits wiederholt beschrieben. In der US—PS 3 595 816 wird eine stabilisierte Polyamidkomposition auf Basis eines Polyamids aus hydrierter polymerisierter Fettsäure, einem polyfunktionellen Diamin und einem sekundären aromatischen Amin, z.B. Diphenylamin, Dioctyldiphenylamin oder Naphthylamin, beschrieben. Auch in der US—PS 2 278 350 werden aromatische Amine wenigstens zwei Kernen, z.B. Phenothiazin, β-Napthylamin o.a. in Mengen bis 10 Gew.-%, vorzugsweise 0,05 bis 5 Gew.-%, als Stabilisatoren gegen thermischen Abbau verwendet. Diese Verbindungen sollen schon in Mengen von 0,5 Gew.-% ausreichend virksam sein. Auch die Verwendung einer Vielzahl von sterisch gehinderten, vorzugsweise o,o'-disubstituierten, sterisch gehinderten phenolischen Verbindungen als Wärmestabilisatoren für Polyamide wurde bereits wiederholt vorgeschlagen, wobei auch hier Mengen von 0,5 Gew.-% als ausreichend wirksam angesehen werden.

Ein Hinweis, daß spezielle (Poly)amine in höheren Konzentrationen, in Kombination mit geeigneten Phenolen, zu einer Verminderung der Wasseraufnahme führen und damit eine höhere Steifigkeit ermöglich, findet sich nicht.

Gegenstand der Erfindung sind daher thermoplastische, teilkristalline, gegebenenfalls verstärke Polyamidformmassen, auf Basis Polyamid 6 und Polyamid 66, die dadurch gekennzeichnet sind, daß sie

1) 2 bis 8 Gew.-%, vorzugsweise 2 bis 8 Gew.-%, bezogen auf das Polyamid, wenigstens eines aromatischen Amins der allgemeinen Formel I oder II

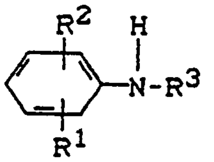 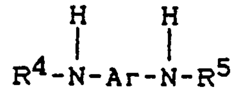

I II

in denen Formel I mindestens 10 C-Atome und Formel II höchstens 40 C-Atome enthalten und

2) 2 bis 8 Gew.-%, bezogen auf das Polyamid, vorzugsweise bis zu 5 Gew.-%, eines sterisch nicht gehinderten Phenols mit mindestens 10 C-Atomen, der allgemeinen Formel III, das höchstens eine Substitutions in o-Stellung zur phenolischen OH-Gruppe aufweisen darf

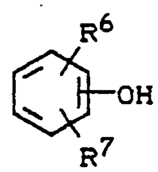

III

wobei in den Formel I bis III die Reste $R^1$ bis $R^7$ und Ar nachstehend definiert sind

und die Summe der Komponenten 1) und 2) immer höchstens 10 Gew.-%, vorzugsweise 8 Gew.-%, bezogen auf Polyamid, betragen darf.

Die aromatischen Amine der allgemeinen Formel I enthalten mindestens 10, vorzugsweise 10 bis 36 C-Atome, besonders bevorzugt 10 bis 24 C-Atome, wobei in der allgemeinen Formel I

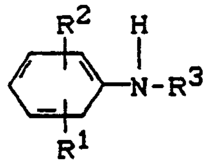

I

$R^1$ und $R^2$, unabhängig voneinander, ein Wasserstoffatom, ein $C_1$—$C_{24}$-, vorzugsweise $C_4$—$C_{18}$-Alkyl-, ein $C_6$—$C_{18}$-, vorzugsweise $C_6$—$C_{12}$-Aryl- oder ein $C_7$—$C_{20}$-, vorzugsweise $C_7$—$C_{15}$-Aralkylradikal, wobei jedes der Radikale mit wenigstens einer $C_1$—$C_{12}$-, vorzugsweise $C_1$—$C_{18}$-Alkylgruppe oder einem Halogenatom (vorzugsweise Cl oder Br) substituiert sein kann und die Arylradikale über —O—, $C_1$—$C_3$-Alkylen oder —$SO_2$— Brückenglieder verbunden sein können, oder $R^1$ und $R^2$ gemeinsam Glieder eines aromatischen oder cycloaliphatischen Ringes mit $C_5$—$C_{12}$ sein können und

$R^3$ ein Wasserstoffatom oder ein $C_1$—$C_{24}$-, vorzugsweise $C_1$—$C_{18}$-Alkyl-, $C_6$—$C_{10}$-, vorzugsweise $C_6$-Aryl-, $C_7$—$C_{15}$-, vorzugsweise $C_7$—$C_{12}$-Aralkyl oder $C_7$—$C_{15}$- vorzugsweise $C_7$—$C_{12}$-Alkarylradikal sein kann.

Bevorzugt sind höhermolekulare bzw. langkettige primäre oder sekundäre, aromatische Amine mit $C_{10}$—$C_{24}$, wie ein- oder mehrfach mit einem $C_1$—$C_{12}$-Alkyl- und/oder $C_7$—$C_{15}$-Aralkylrest substituierte aromatische Amine oder gebenenfalls mit mindestens einer $C_1$—$C_6$-Alkyl-Gruppe substituierte Amino-Di- oder Triphenyle, deren Ringe gegebenenfalls über —O—, $C_1$—$C_3$-Alkylen, oder —$SO_2$-Brückenglieder verbunden sein können.

Die aromatischen Polyamine der allgemeinen Formel II enthalten höchstens 40 C-Atome, vorzugsweise höchtens 30 C-Atome. In der allgemeinen Formel II

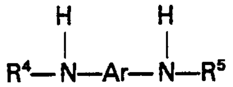 (II)

bedeuten

Ar einen mit $R^4$ und $R^5$ substituierten Phenylen- oder Naphthylenrest oder ein direkt oder über —O—, $C_1$—$C_3$-Alkylen- oder —$SO_2$-Brückenglieder verbundenes, gegebenenfalls ein- oder mehrfach mit einer $C_1$—$C_4$-Alkylgruppe substituiertes $C_{12}$—$C_{36}$-, vorzugsweise $C_{12}$—$C_{20}$-Diarylenradikal und

$R^4$ und $R^5$ gleich oder verschieden, ein Wasserstoffatom oder ein $C_1$—$C_{24}$-, vorzugsweise $C_1$—$C_{18}$-Alkylradikal.

Die Amine werden in Kombination mit nicht sterisch gehinderten monophenolischen Verbindungen mit mindestens 10 C-Atomen verwendet, die höchstens in einer o-Stellung zur phenolischen OH-Gruppe substituiert sein dürfen und der allgemeinen Formel III entsprechen:

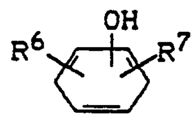

III

in der

$R^6$ und $R^7$, unabhängig voneinander, ein Wasserstoffatom, eine $C_1$—$C_{16}$-, vorzugsweise $C_4$—$C_{12}$-Alkyl-, ein $C_6$—$C_{18}$-, vorzugsweise $C_6$—$C_{12}$-Aryl- oder ein $C_7$—$C_{20}$-, vorzugsweise $C_7$—$C_{15}$-Aralkylradikal bedeuten, wobei jedes der Radikale mit wenigstens einer $C_1$—$C_{12}$-Alkylgruppe oder einem Halogenatom (vorzugsweise Cl oder Br) substituiert sein kann und die Arylradikale über —O—, $C_1$—$C_3$-Alkylen oder —$SO_2$-Brückenglieder verbunden sein können, oder

$R^6$ und $R^7$ Glieder eine aromatischen oder cycloaliphatischen Rings mit $C_5$—$C_{12}$ sein können.

Bevorzugt sind ein- oder mehrfach $C_1$—$C_{12}$-Alkyl- und/oder $C_7$—$C_{15}$-Aralkyl substituierte monophenolische Verbindungen mit $C_{10}$—$C_{22}$, die maximal in einer o-Stellung zur OH-Gruppe substituiert sein dürfen, oder gegebenenfalls mit mindestens einer $C_1$—$C_6$-Alkyl-Gruppe substituierte Monohydroxy-di- oder -triphenyle, deren Ringe gegebenenfalls über —O—, $C_1$—$C_3$-Alkylen oder —$SO_2$-Brückenglieder verbunden sein können und die höchstens in einer o-Stellung zur OH-Gruppe substituiert sein dürfen.

Beispielhaft können folgende aromatische Amine, Diamine und Phenole gennant werden:

a) Aromatische Monoamine

Tetrahydronaphthylamine, 2-Butylanilin (sekundär un tertiär), 4-tert.-Butylanilin, 4-tert.-Pentylanilin, Octylanilin (Gemische) Nonylanilin (Gemische), Dodecylanilin, (Gemische), 4-Aminodiphenyl, 2-Aminodiphenyl, mit Alkylgruppen substituierte Aminodiphenyle, 1-Aminonaphthalin, 2-Aminonaphthalin, Benzylanilin(e), Benzyltoluidin(e), 2-Phenyl-2-(4-aminophenyl)-propan, 4-Aminodiphenylsulfon, 4-Aminodiphenylether, 2- oder 4-Cyclohexylaniline, N,N-Diphenylamin, N-Benzylanilin oder Gemische der genannten Verbindungen.

b) Aromatische Diamine

Bis-(4-aminophenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), N,N-Dimethyl-4,4'-biphenyldiamin, Bis-(4-methylaminophenyl)-methan, 2,2-Bis-(4-methylaminophenyl)-propan oder Gemische der genannten Verbindungen.

c) Phenolische Verbindungen

Tetrahydronaphthol, 2-Butylphenol (sekundär und tertiär), 4-t-Butylphenol, Thymol, 4-tert.-Pentylphenol, Octylphenol (Gemische), Nonylphenol (Gemische), Dodecylphenol (Gemische), 4-Hydroxydiphenyl, 2-Hydroxydiphenyl, mit Alkylgruppen substituierte Hydroxydiphenyle, wie sie z.B. in der DE—OS 1 943 230 beschrieben sind, 1-Naphthol, 2-Naphthol, Benzylphenol(e), Benzylkresol(e), 2-Phenyl-2-(4-hydroxyphenyl)-propan, 4-Hydroxydiphenylsulfon, 4-Hydroxydiphenylether, 2- oder 4-Cyclohexylphenole oder Gemische der genannten Verbindungen.

Besonders vorteilhaft sind:

Nonylanilin, Dodecylanilin, 2-Aminobiphenyl, 4-Aminodiphenylether, 2- und 4-Cyclohexylanilin, N,N-Diphenylamin und N-Benzylanilin, gegebenenfalls in Kombination mit Alkylgruppen-substituierten Hydroxydiphenylen, Nonylphenol, Dodecylphenol, 2-Hydroxybiphenyl und 2-Phenyl-2-(4-hydroxyphenyl)-propan.

Das Amin wird in Mengen von 2 bis 8 Gew.-%, bezogen auf Polyamid, eingearbeitet in Kombination mit Phenolen der allgemeinen Formel III, wobei die Phenolmenge 2 bis 8 Gew.-%, vorzugsweise bis zu 5 Gew.-%, bezogen auf Polyamid, und die Summe der beiden Komponenten max. 10 Gew.-%, vorzugsweise max. 8 Gew.-%, bezogen auf Polyamid, betragen soll.

Es werden teilkristalline PA-6 und PA-6,6 verwendet. Anstelle von Polyamiden können auch Polymerlegierungen eingesetzt werden aus überwiegend, vorzugsweise zu mindestens 60 Gew.-% Polyamid und bekannten elastifizierenden Polymeren wie z.B. Polyolefinen, olefinischen Copolymerisaten, vorzugsweise solchen mit Anteilen an eingebauten polaren Gruppen bzw. auch entsprechenden Pfropf-(Co)-polymerisaten.

Zur Herstellung der erfindungsgemäßen modifizierten Polyamide können die Polyamidkoponente und die Modifikatoren oberhalb des Schmelzpunktes des Polyamids miteinander vermischt werden. Dies kann z.B. unmittelbar nach der Herstellung des Polyamids durch Vermischen des Modifikators mit der als Strang abzuspinnenden Schmelze erfolgen. Vorzugsweise werden die erfindungsgemäß modifizierten Polyamide durch Mischen der Ausgangskomponenten in üblichen Schneckenmaschinen hergestellt. Dabei können die

Komponenten sowhol vor der gemeinsamen Dosierung gemischt als auch von 2 Dosieranlagen getrennt in den Extruder gefördert werden. Bei flüssigen Additiven ist die parallele Zugabe vorteilhaft.

Dieses Verfahren wird insbesondere gewählt, wenn neben Polyamiden weitere Polymere zur Herstellung entsprechend modifizierter Polymerlegierungen eingesetzt werden oder andere Additive wie Stabilisatoren, Entformungsmittel, Gleitmittel, Kristallisationsbeschleuniger, Weichmacher, Pigmente, Farb-, Verstärkungs- und/oder Füllstoffe, wie Glasfasern oder Asbest, eingearbeitet werden.

Zur Compoundierung eignen sich übliche bekannte Apparaturen. Doppelschneckenextruder werden bevorzugt eingesetzt.

Die erfindungsgemäßen Polyamidformmassen zeichnen sich bei sonst im wesentlichen konstantem Eigenschaftsbild gegenüber den unmodifizierten Polyamiden durch eine erheblich verbesserte Dimensionsstabilität und eine höhere Steifigkeit aus. Besonders geeignet sind die Polyamidformmassen zur Herstellung von glasfaserverstärkten oder mit Füllstoffen abgemischten Formkörpern, da der versteifende und hartmachende Effekt der vorzugsweise in Mengen von 10 bis 60 Gew.-% zugegebenen Zuschläge durch die Wasseraufnahme weit weniger als bisher kompensiert wird. Diese glasfaserverstärkten Produkte zeichnen sich durch eine verbesserte Reißdehnung und Zähigkeit aus.

Die neuen Polyamidformmassen eignen sich besonders zur Herstellung von Formkörpern nach dem Spritzgußverfahren und vorzugsweise für Anwendungen, bei denen es auf die Kombination von hoher Steifigkeit, hoher Wärmeformbeständigkeit und zufriedenstellender Zähigkeit ankommt. Die glasfaserverstärkten Produkte eignen sich vorzugsweise für Formteile im Automobilbau wie Kühlerkästen oder Ölwannen und für Anwendungen im Unterwasserbereich.

Beispiel 1 (Vergleich VV—0)

95 Gew.-% eines 6-Polyamids mit einer rel. Viskosität von 3,1, gemessen in 1% iger Lösung in m-Kresol bei 25°C und 5 Gew.-% p-Cyclohexylanilin werden mittels eines Trommelmischers gemischt und über eine Dosierwaage in einen Zweiwellenextruder vom Typ ZSK 53 gefördert und bei 260°C mit 90 UpM extrudiert. Die homogene Schmelze wird als Strang in ein Wasserbad abgesponnen, granuliert und bei 80 bis 100°C bis zu einem Wassergehalt von 0,1% getrocknet. Das Produkt hat eine rel. Viskosität von 2,9.

Aus dem Produkte hergestellte Formkörper werden zusammen mit unmodifizierten Vergleichsproben (VV 1) über längere Zeiträume in Normklima und in Wasser gelagert, Meßdaten sind in Tabelle 1 zusammengestellt.

Zur Bestimmung der E-Moduli nach Wasserraufnahme wurden unverstärkte Produkte einheitlich auf 2,5 Gew.-% Wassergehalt durch Wasserlagerung konditioniert.

Beispiel 2—4

Analog Beispiel 1 werden verschiedene hydrophobierende Additive in verschiedene Polyamide eingearbeitet und die erhaltenen Produkte, wie in Beispiel 1 beschrieben, untersucht. Die Zusammensetzung der modifizierten Polyamide und ihre Eigenschaften sind in Tabelle 1 aufgeführt.

Tabelle 1

| Bsp. | Ausgangskomponenten PA-Typ ($\eta_{rel}$) | Menge (Gew.-%) | Additiv (Gew.-%) | $\eta_{rel}$ | Produkteigenschaften Wasseraufnahme (Gew.-%) im Normklima | bei Wasserlagerung (23°C) nach 40 Tagen | E-Modul vor $H_2O$-Aufnahme (MPa) | E-Modul nach 2,5 % $H_2O$-Aufnahme (MPa) | relative Änderung *) der E-Moduli auf (%) |
|---|---|---|---|---|---|---|---|---|---|
| 1** VV-0 | PA-6 (3,1) | 95 | 5 p-Cyclohexylanilin | 2,9 | 0,86 | 3,78 | 3120 | 1650 | 127 |
| 2 | " | 94 | 4 N,N-Diphenylamin + 2 2-Hydroxydiphenyl | 2,9 | 0,83 | 3,72 | 3100 | 1660 | 128 |
| 3 | " | 90 | 4 N,N-Diphenylamin + 6 2-Hydroxydiphenyl | 2,8 | 0,79 | 3,62 | 2940 | 1480 | 114 |
| 4 | " | 94 | 2 N-Benzylanilin + 4 Tolylkresol (Isomerengemisch) | 2,9 | 0,82 | 3,71 | 3100 | 1640 | 126 |
| VV-1 | PA-6 | 100 | - | 3,1 | 1,12 | 5,22 | 3220 | 1300 | 100 |
| VV-2 | PA-6,6 | 100 | - | 2,7 | 0,78 | 2,96 | 3400 | 1600 | 100 |

* (poly)aminfreies Polyamid = 100 %

** Vergleichsversuch VV-0

**Patentansprüche**

1. Thermoplastische, teilkristalline Polyamidformmassen auf Basis Polyamid 6 und Polyamid 66, die

1) 2 bis 8 Gew.-%, bezogen auf das Polyamid, wenigstens eines aromatischen Amins der allgemeinen Formel I oder II

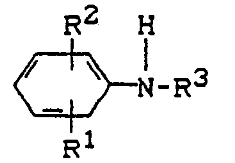

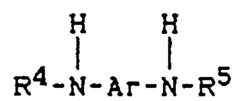

in denen Formel I mindestens 10 C-Atome und Formel II höchstens 40 C-Atome enthalten und in denen

$R^1$ und $R^2$, unabhängig voneinander, ein Wasserstoffatom, ein $C_1$—$C_{24}$-Alkyl-, eine $C_6$—$C_{18}$-Aryl- oder ein $C_7$—$C_{20}$-Aralkylradikal bedeuten, wobei jedes der Radikale mit wenigstens einer $C_1$—$C_{12}$-Alkylgruppe oder einem Halogenatom substituiert sein kann und die Arylradikale über —O—, $C_1$—$C_3$-Alkylen oder —$SO_2$-Brückenglieder verbunden sein können, oder $R^1$ und $R^2$ gemeinsam Glieder eines aromatischen oder cycloaliphatischen Ringes mit $C_5$—$C_{12}$ sein können und

$R^3$ ein Wasserstoffatom oder ein $C_1$—$C_{24}$-Alkyl-, $C_6$—$C_{15}$-Aryl-, $C_7$—$C_{12}$-Aralkyl- oder $C_7$—$C_{15}$-Alkarylradikal bedeuten, und

Ar einen mit $R^4$ und $R^5$ substituierten Phenylen- oder Naphthylenrest oder ein direkt oder über —O—, $C_1$—$C_3$-Alkylen- oder —$SO_2$-Brückenglieder verbundenes, gegebenenfalls ein- oder mehrfach mit einer $C_1$—$C_4$-Alkylgruppe substituiertes $C_{12}$—$C_{36}$-Diarylenradikal und

$R^4$ und $R^5$ gleich oder verschienden, ein Wasserstoffatom oder ein $C_1$—$C_{24}$-Alkylradikal bedeuten, und

2) 2—8 Gew.-%, bezogen auf das Polyamid, einer sterisch nicht gehinderten, monophenolischen Verbindung, mit mindestens 10 C-Atomen der allgemeinen Formel III, die höchstens eine Substitution in o-Stellung zur phenolischen OH-Gruppe aufweisen darf

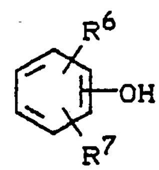

III

in der

$R^6$ und $R^7$, unabhängig voneinander, ein Wasserstoffatom, eine $C_1$—$C_{16}$-Alkyl-, ein $C_6$—$C_{18}$-Aryl- oder ein $C_7$—$C_{20}$-Aralkylradikal bedeuten, wobei jedes der Radikale mit wenigstens einer $C_1$—$C_{12}$-Alklygruppe oder einem Halogenatom substituiert sein kann und die Arylradikale über —O—, $C_1$—$C_3$-Alkylen oder —$SO_2$-Brückenglieder verbunden sein können, oder

$R^6$ und $R^7$ Glieder eines aromatischen oder cycloaliphatischen Ringes mit $C_5$—$C_{12}$ sein können, enthalten und

wobei die Summe der Komponenten 1) und 2) immer höchstens 10 Gew.-%, bezogen auf Polyamid, betragen darf.

2. Polyamidformmassen nach Anspruch 1, dadurch gekennzeichnet, daß die aromatischen Amine der allgemeinen Formel I 10 bis 36 C-Atome und die Polyamine der allgemeinen Formel II höchstens 30 C-Atome aufweisen.

3. Polyamidformmassen nach mindestens einem der Ansprüche 1 oder 2, dadurch gekennzeichnet, daß die Komponente 1, in Mengen von 2 bis 4 Gew.-%, bezogen auf das Polyamid, eingesetzt wird und die Summe aus 1) und 2) höchstens 6—10 Gew.-%, bezogen auf Polyamid beträgt.

4. Polyamidformmassen nach mindestens einem der Ansprüche 1 bis 3, dadurch gekennzeichnet, daß in der allgemeinen Formel I

$R^1$ und $R^2$, unabhängig voneinander, ein Wasserstoffatom, ein $C_4$—$C_{18}$-Alkyl-, ein $C_6$—$C_{12}$-Aryl-, oder ein $C_7$—$C_{15}$-Aralkylradikal, wobei jedes der Radikale mit wenigstens einer $C_1$—$C_{15}$-Alkylgruppe oder einem Halogenatom substituiert sein kann und die Arylradikale über —O—, $C_1$—$C_3$-Alkylen oder —$SO_2$-Brückenglieder verbunden sein können, oder $R^1$ und $R^2$ gemeinsam Glieder eines aromatischen oder cycloaliphatischen Ringes mit $C_5$—$C_{12}$ sein können und

$R^3$ ein Wasserstoffatom oder ein $C_1$—$C_{18}$-Alkyl-, ein Phenyl, ein $C_7$—$C_{12}$-Aralkyl- oder $C_7$—$C_{12}$-Alkarylradikal sein kann;

in der allegemeinen Formel II

Ar einen mit $R^4$ und $R^5$ substituierten Phenylen- oder Naphthylenrest oder ein direkt oder über —O—, $C_1$—$C_3$-Alkylen- oder —$SO_2$-Brückenglieder verbundenes, gegebenenfalls ein- oder mehrfach mit einer $C_1$—$C_4$-Alkylgruppe substituiertes $C_{12}$—$C_{20}$-Diarylenradikal und

$R^4$ und $R^5$ gleich oder verschienden, ein Wasserstoffatom oder ein $C_1$—$C_{18}$-Alkylradikal bedeuten, und in der allgemeinen Formel III

$R^6$ und $R^7$, unabhängig voneinander, ein Wasserstoffatom, ein $C_4$—$C_{12}$-Alkyl—, $C_6$—$C_{12}$-Aryl- oder ein $C_7$—$C_{15}$-Aralkylradikal bedeuten, wobei jedes der Radikale mit wenigstens einer $C_1$—$C_{12}$-Alklygruppe oder einem Halogenatom substituiert sein kann und die Arylradikale über —O—, $C_1$—$C_3$-Alkylen oder —$SO_2$-Brückenglieder verbunden sein können, oder

$R^6$ und $R^7$ Glieder eines aromatischen oder cycloaliphatischen Rings mit $C_5$—$C_{12}$ sein können.

5. Polyamidformmassen nach mindestens einem der Ansprüche 1 bis 4, dadurch gekennzeichnet, daß als Amine höhermolekulare oder langkettige primäre oder sekundäre, aromatische Amine mit $C_{10}$—$C_{24}$-, insbesondere ein- oder mehrfach mit einem $C_1$—$C_{12}$-Alkyl- und/oder $C_7$—$C_{15}$-Aralkylrest substituierte aromatische Amine oder gegebenenfalls mit mindestens einer $C_1$—$C_6$-Alkylgruppe sustituierte Amio-di- oder -triphenyle, deren Ringe gegebenenfalls über —O—, $C_1$—$C_3$-Alkylen, oder —$SO_2$-Brückenglieder verbunden sein können, verwendet werden.

6. Polyamidformmassen nach mindestens einem der Ansprüche 1 bis 5, dadurch gekennzeichnet, daß als monophenolische Verbindungen ein- oder mehrfach $C_1$—$C_{12}$-Alkyl- und/oder $C_7$—$C_{15}$-Aralkyl substitutierte monophenolische Verbindungen mit $C_{10}$—$C_{22}$, die maximal in einer o-Stellung zur OH-Gruppe substituiert sein dürfen, oder gegebenenfalls mit mindestens einer $C_1$—$C_6$-Alkylgruppe substituierte Monohydroxy-di- oder -triphenyle, deren Ringe gegebenefalls über —O—, $C_1$—$C_3$-Alkylen oder —$SO_2$-Brückenglieder verbunden sein können und die höchstens in einer o-Stellung zur OH-Gruppe substituiert sein dürfen, verwedent werden.

7. Polyamidformmassen nach mindestens einem der Ansprüche 1 bis 6, dadurch gekennzeichnet, daß als Amine Tetrayhydronaphthylamine, 2-Butylanilin (sekundär und tertiär), 4-tert.-Butylanilin, 4-tert.-Pentylanilin, Octylanilin (Gemische), Nonylanilin (Gemische), Dodecylanilin (Gemische), 4-Aminodiphenyl, 2-Aminodiphenyl, mit Alkylgruppen substituierte Aminodiphenyle, 1-Aminonaphthalin, 2-Aminonaphthalin, Benzylanilin(e), Benzyltoluidin(e), 2-Phenyl-2-(4-aminophenyl)-propan, 4-Aminodiphenylsulfon, 4-Aminodiphenylether, 2- oder 4-Cyclohexylaniline, N,N-Diphenylamin, N-Benzylanilin oder Gemische der genannten Verbindungen, oder

Bis-(4-aminophenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), N,N-Dimethyl-4,4'-biphenyldiamin, Bis-(4-methylaminophenyl)-methan, 2,2-Bis-(4-methylaminophenyl)-propan oder Gemische der genannten Verbindungen, und als monophenolische Verbindungen

Tetrahydronaphthol, 2-Butylphenol (sekundär und tertiär), 4-t-Butylphenol, Thymol, 4-tert.-Pentylphenol, Octylphenol (Gemische), Nonylphenol (Gemische), Dodecylphenol (Gemische), 4-Hydroxydiphenyl, 2-Hydroxydiphenyl, mit Alkylgruppen substituierte Hydroxydiphenyle, wie sie z.B. in der DE—OS 1 943 230 beschrieben sind, 1-Naphthol, 2-Naphthol, Benzylphenol(e), Benzylkresol(e), 2-Phenyl-2-(4-hydroxyphenyl)-propan, 4-Hydroxydiphenylsulfon, 4-Hydroxydiphenylether, 2- oder 4-Cyclohexylphenole oder Gemische der genannten Verbindungen, verwendet werden.

8. Polyamidformmassen nach mindestens einem der Ansprüche 1 bis 7, dadurch gekennzeichnet, daß als Amine

Nonylanilin, Dodecylanilin, 2-Aminobiphenyl, 4-Aminodiphenylether, 2- und 4-Cyclohexylanilin, N,N-Diphenylamin und N-Benzylanilin, in Kombination mit Alkylgruppen-substituierten Hydroxydiphenylen, Nonylphenol, Dodecylphenol, 2-Hydroxybiphenyl und 2-Phenyl-2-(4-hydroxyphenyl)-propan, verwendet werden.

9. Polyamidformmassen nach mindestens einem der Ansprüche 1 bis 8, dadurch gekennzeichnet, daß verstärkte und/oder mit elastifizierenden Polymeren abgemischte Polyamidmassen eingesetzt werden.

10. Formkörper aus Polyamidformmassen nach mindestens einem der Ansprüche 1 bis 9.

**Revendications**

1. Mélanges à mouler thermoplastiques partiellement cristalline à base de polyamide 6 et de polyamide 66, qui contiennent

1) 2 à 8% en poids, par rapport au polyamide, d'au moins une amine aromatique de formule générale I ou II

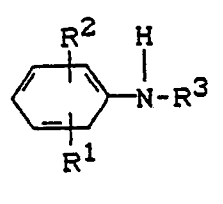

I

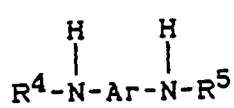

II

dont la formule I contient au moins 10 atomes de carbone et la formule II contient au maximum 40 atomes de carbone et où

$R^1$ et $R^2$, indépendamment l'un de l'autre, représente un atome d'hydrogène, un radical aryle en $C_1$ à

$C_{24}$, un radical aryle en $C_6$ à $C_{18}$ ou un radical aralkyle en $C_7$ à $C_{20}$, chacun des radicaux pouvant être substitué avec au moins un groupe alkyle en $C_1$ à $C_{12}$ ou un atome d'halogène, et les radicaux alkyle pouvant être liés par des ponts —O—, alkylène en $C_1$ à $C_3$ ou —$SO_2$—, ou bien $R^1$ et $R^2$ peuvent former conjointement des chaînons d'un noyau aromatique ou cycloaliphatique ayant 5 à 12 atomes de carbone et

$R^3$ est un atome d'hydrogène ou un radical alkyle en $C_1$ à $C_{24}$, aryle en $C_6$ à $C_{10}$, aralkyle en $C_7$ à $C_{15}$ ou alkaryle en $C_7$ à $C_{15}$, et

Ar est un reste phénylène ou naphtylène portant des substituants $R^4$ et $R^5$ ou un radical diarylène en $C_{12}$ à $C_{36}$ en liaison directe ou par l'intermédiaire de ponts —O—, alkylène en $C_1$ à $C_3$ ou —$SO_2$—, éventuellement substitué avec un ou plusieurs groupes alkyle en $C_1$ à $C_4$ et

$R^4$ et $R^5$, identiques ou différents, représentent un atome d'hydrogène ou un radical alkyle en $C_1$ à $C_{24}$, et

2) 2 à 8% en poids, par rapport au polyamide, d'un composé monophénolique sans encombrement stérique, ayant au moins 10 atomes de carbone, de formule générale III, qui peut présenter au maximum une substitution en position ortho par rapport au groupe OH phénolique

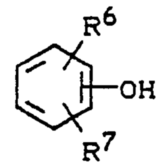

III

formule dans laquelle

$R^6$ et $R^7$, indépendamment l'un de l'autre, désignent un atome d'hydrogène, un radical alkyle en $C_1$ à $C_{16}$, un radical aryle en $C_6$ à $C_{18}$ ou un radical aralkyle en $C_7$ à $C_{20}$, chacun des radicaux pouvant être substitué avec au moins un groupe alkyle en $C_1$ à $C_{12}$ ou un atome d'halogène, et les radicaux aryle pouvant être liés par l'intermédiaire de ponts —O—, alkylène en $C_1$ à $C_3$ ou —$SO_2$—, ou bien

$R^6$ et $R^7$ peuvent être des chaînons d'un noyau aromatique ou cycloaliphatique ayant 5 à 12 atopmes de carbone, et

la somme des composants 1) et 2) ne peut tout au plus s'élever qu'à 10% en poids par rapport au polyamide.

2. Mélanges à mouler à base de polyamide suivant la revendication 1, caractérisé en ce que les amines aromatiques de formule I présentent 10 à 36 atomes de carbone et les polyamines de formule générale II présentent au maximum 30 atomes de carbone.

3. Mélanges à mouler à base de polyamide suivant au moins l'une des revendications 1 et 2, caractérisés en ce que le composant 1 est utilisé en quantités de 2 à 4% en poids par rapport au polyamide et la somme de 1) et 2) s'élève au maximum à 6—10% en poids par rapport au polyamide.

4. Mélanges à mouler à base de polyamide suivant au moins l'une des revendications 1 à 3, caractérisés en ce que dans la formule générale I

$R^1$ et $R^2$, indépendamment l'une de l'autre, représentent un atome d'hydrogène, un radical alkyle en $C_4$ à $C_{18}$, un radical aryle en $C_6$ à $C_{12}$ ou un radical aralkyle en $C_7$ à $C_{15}$, chacun des radicaux pouvant être substitué avec au moins un groupe alkyle en $C_1$ à $C_{15}$ ou un atome d'halogène et les radicaux aryle pouvant être liés par l'intermédiaire de ponts —O—, alkylène en $C_1$ à $C_3$ ou —$SO_2$—, ou bien $R^1$ et $R^2$ peuvent former conjointement des chaînons d'un noyau aromatique ou cycloaliphatique en $C_5$ à $C_{12}$ et

$R^3$ peut représenter un atome d'hydrogène ou un radical alkyle en $C_1$ à $C_{18}$, un radical phényle, un radical aralkyle en $C_7$ à $C_{12}$ ou un radical alkaryle en $C_7$ à $C_{12}$;

dans la formule générale II

Ar désigne un reste phénylène ou naphtylène portant des substituants $R^4$ et $R^5$ ou représente un radical diarylène en $C_{12}$ à $C_{20}$ lié directement ou par l'intermédiaire de ponts —O—, alkylène en $C_1$ à $C_3$ ou —$SO_2$—, portant éventuellement un ou plusieurs substituants alkyle ayant 1 à 4 atomes de carbone, et

$R^4$ et $R^5$, identiques ou différents, désignent un atome d'hydrogène ou un radical alkyle en $C_1$ à $C_{18}$, et dans la formule générale III

$R^6$ et $R^7$, indépendamment l'un de l'autre, représentent un atome d'hydrogène, un radical alkyle en $C_4$ à $C_{12}$, un radical aryle en $C_6$ à $C_{12}$ ou un radical aralkyle en $C_7$ à $C_{15}$, chacun des radicaux pouvant être substitué avec au moins un groupe alkyle en $C_1$ à $C_{12}$ ou un atome d'halogène, et les radicaux aryle pouvant être liés par l'intermédiaire de ponts —O—, alkylène en $C_1$ à $C_3$ ou —$SO_2$—, ou bien

$R^6$ et $R^7$ peuvent être des chaînons d'un noyau aromatique ou cycloaliphatique en $C_5$ à $C_{12}$.

5. Mélanges à mouler à base de polyamide suivant au moins l'une des revendications 1 à 4, caractérisés en ce qu'on utilise comme amines de amines aromatiques primaires ou secondaires de poids moléculaire élevé ou à longue chaîne ayant 10 à 24 atomes de carbone, notamment des amines aromatiques substituées par un ou plusieurs restes alkyle en $C_1$ à $C_{12}$ et/ou restes aralkyle en $C_7$ à $C_{15}$, ou des aminodi- ou -triphényle portant éventuellement au moins un substituant alkyle en $C_1$ à $C_6$, dont les noyaux peuvent être reliés le cas échéant par des ponts —O—, alkylène en $C_1$ à $C_3$ ou —$SO_2$—.

6. Mélanges à mouler à base de polyamide suivant au moins l'une des revendications 1 et 5, caractérisés en ce qu'on utilise comme composés monophénoliques des composés monophénoliques en

$C_{10}$ à $C_{22}$ portant un ou plusieurs substituants alkyle en $C_1$ à $C_{12}$ et/ou aralkyle en $C_7$ à $C_{15}$, qui peuvent être substitués au maximum dans l'une des positions ortho par rapport au groupe OH, ou des monohydroxy-diphényles ou -triphényles substitués le cas échéant avec au moins un groupe alkyle en $C_1$ à $C_6$, dont les noyaux peuvent être liés éventuellement par l'intermédiaire de ponts —O—, alkylène en $C_1$ à $C_3$ ou —$SO_2$— et qui peuvent être substitués au maximum dans une position ortho par rapport au groupe OH.

7. Mélanges à mouler à base de polyamide suivant au moins l'une des revendications 1 à 6, caractérisés en ce qu'on utilise comme amines des tétrahydronaphtylamines, la 2-butylaniline (secondaire et tertiaire), la 4-tertiobutylaniline, la 4-tertiopentylaniline, l'octylaniline (mélanges), la nonylaniline (mélanges), la dodécylaniline (mélanges), le 4-aminodiphényle, le 2-aminodiphényle, des aminodiphényles substitués avec des groupes alkyle, le 1-aminonaphtalène, le 2-aminonaphtalène, une benzylaniline, une benzyltoluidine, le 2-phényl-2-(4-aminophenylpropane, la 4-aminodiphénylsulfone, l'éther de 4-aminodiphényle, des 2- ou 4-cyclohexylanilines, la N,N-diphénylamine, la N-benzylaniline ou des mélanges des composés mentionnés, ou bien

le bis-(4-aminophényl)-méthane, la 3-méthylbenzidine, le 2,2-bis-(4-aminophényl)-propane, le 1,1-bis-(4-aminophényl)-cyclohexane, le 1,2-diaminobenzène, le 1,4-diaminobenzène, le 1,4-diaminonaphtalène, le 1,5-diaminonaphtalène, un 1,3-diaminotoluène, la N,N-diméthyl-4,4'-biphényldiamine, le bis-(4-méthyl-aminophényl)-méthane, le 2,2-bis-(4-méthylaminophényl)-propane ou des mélanges des composés metionnés,

et comme composés monophénoliques

le tétrahydronaphtol, le 2-butylphénol (secondaire et tertiaire), le 4-tertio-butylphénol, le thymol, le 4-tertio-pentylphénol, l'octylphénol (mélanges), le nonylphénol (mélanges), le dodécylphénol (mélanges), le 4-hydroxydiphényle, le 2-hydroxydiphényle, des hydroxydiphényles substitués avec des groupes alkyle, tels que décrits dans le document DE—OS 1 943 230, le 1-naphtol, le 2-naphtol, un benzylphénol, un benzylcrésol, le 2-phényl-2-(4-hydroxyphénol)-propane, la 4-hydroxydiphénylsulfone, l'éther de 4-hydroxydiphényle, des 2- ou 4-cyclohexylphénols ou des mélanges des composés mentionnés.

8. Mélanges à mouler à base de polyamide suivant au moins l'une des revendications 1 à 7, caractérisés en ce qu'on utilise comme amines

la nonylaniline, la dodécylaniline, le 2-aminobiphényle, l'éther de 4-aminodiphényle, la 2- et la 4-cyclohexylaniline, la N,N-diphénylamine et la N-benzylaniline, en association avec des hydroxydiphényles substitués avec des groupes alkyle, le nonlyphénol, le dodécylphénol, le 2-hydroxybiphényle et le 2-phényl-2-(4-hydroxyphényl)propane.

9. Mélanges à mouler à base de polyamide suivant au moins l'une des revendications 1 à 8, caractérisés en ce qu'on utilise des matières polyamidiques renforcées et/ou mélange avec des polymères conférant l'élasticité.

10. Pièces moulées obtenues à partir de mélanges à mouler à base de polyamide suivant au moins l'une des revendications 1 à 9.

**Claims**

1. Theromplastic, partly crystalline polyamide moulding compounds based on polyamide-6 and polyamide-66 which contain

1) 2 to 8% by weight, based on the polyamide, of at least one aromatic amine corresponding to general formula I or II

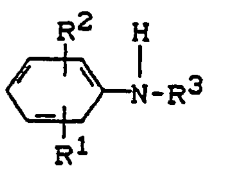

I

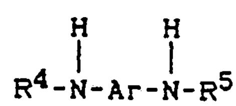

II

in which formula I contains at least 10 C atoms and formula II at most 40 C atoms and in which

$R^1$ and $R^2$ independently of one another represent a hydrogen atom, a $C_{1-24}$ alkyl, a $C_{6-18}$ aryl or a $C_{7-20}$ aralkyl, each of the radicals optionally being substituted by at least one $C_{1-12}$ alkyl group or a halogen atom and the aryl radicals optionally being attached by —O—, $C_{1-3}$ alkylene or —$SO_2$, bridge members, or $R^1$ and $R^2$ together may be members of an aromatic or cycloaliphatic $C_{5-12}$ ring and

$R^3$ is a hydrogen atom or a $C_{1-24}$ alkyl, $C_{6-10}$ aryl, $C_{7-15}$ aralkyl or $C_{7-15}$ alkaryl radical and

Ar represents a phenylene or naphthylene radical substituted by $R^4$ and $R^5$ or a $C_{12-36}$ diarylene radical attached directly or by —O—, $C_{1-3}$ alkylene or —$SO_2$ bridge members and optionally substituted one or more times by a $C_{1-4}$ alkyl group and

$R^4$ and $R^5$ may be the same or different and represent a hydrogen atom or a $C_{1-24}$ alkyl radical, and

2) 2 to 8% by weight, based on polyamide, of a sterically unhindered monophenolic compound

containing at least 10 C atoms corresponding to general formula III which may have at most one substitution in the o-position to the phenolic OH group

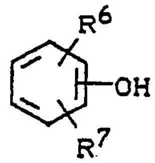

III

in which

$R^6$ and $R^7$ independently of one another represent a hydrogen atom, a $C_{1-16}$ alkyl, a $C_{8-18}$ aryl or a $C_{7-20}$ aralkyl radical, each of the radicals optionally being substituted by at least one $C_{1-12}$ alkyl group or a halogen atom and the aryl radicals optionally being attached by —O—, $C_{1-3}$ alkylene or —$SO_2$ bridge members, or

$R^6$ and $R^7$ may be members of an aromatic or cycloaliphatic $C_{5-12}$ ring,

the sum of components a) and 2) always being no more than at most 10% by weight.

2. Polyamide moulding compounds as claimed in claim 1, characterized in that the aromatic amines of general formula I contain 10 to 36 C atoms and the polyamines of general formula II at most 30 C atoms.

3. Polyamide moulding compounds as claimed in at least one of claims 1 to 2, characterized in that component 1 is used in quantities of 2 to 4% by weight, based on the polyamide, and the sum of 1) and 2) is at most 6—10% by weight, based on polyamide.

4. Polyamide moulding compounds as claimed in at least one of claims 1 to 3, characterized in that, in general formula I,

$R^1$ and $R^2$ independently of one another represent a hydrogen atom, a $C_{4-18}$ alkyl, a $C_{6-12}$ aryl or a $C_{7-15}$ aralkyl radical, each of the radicals optionally being substituted by at least one $C_{1-15}$ alkyl group or a halogen atom and the aryl radicals optionally being attached by —O—, $C_{1-3}$ alkylene or —$SO_2$ bridge members, or $R^1$ and $R^2$ together may be members of an aromatic or cycloaliphatic $C_{5-12}$ ring and

$R^3$ is a hydrogen atom or a $C_{1-15}$ alkyl, a phenyl, a $C_{7-12}$ aralkyl or $C_{7-12}$ alkaryl radical;

in general formula II,

Ar represents a phenylene or naphthylene radical substituted by $R^4$ and $R^5$ or a $C_{12-20}$ diarylene radical attached directly or by —O—, $C_{1-3}$ alkylene or —$SO_2$ bridge members and optionally substituted one or more times by a $C_{1-4}$ alkyl group and

$R^4$ and $R^5$ may be the same or different and represent a hydrogen atom or a $C_{1-18}$ alkyl radical, and

in general formula III

$R^6$ and $R^7$ independently of one another represent a hydrogen atom, a $C_{4-12}$ alkyl, a $C_{8-12}$ aryl or a $C_{7-15}$ aralkyl radical, each of the radicals optionally being substituted by at least one $C_{1-12}$ alkyl group or a halogen atom and the aryl radicals optionally being attached by —O—, $C_{1-3}$ alkylene or —$SO_2$ bridge members, or

$R^6$ and $R^7$ may be members of an aromatic or cycloaliphatic $C_{5-12}$ ring.

5. Polyamide moulding compounds as claimed in at least one of claims 1 to 4, characterized in that the amines used are relatively high molecular weight or long-chain primary or secondary, aromatic amines with $C_{10-24}$, more especially aromatic amines substituted one or more times by a $C_{1-12}$ alkyl and/or $C_{7-15}$ aralkyl radical or aminodiphenyls or triphenyls optionally substituted by at least one $C_{1-6}$ alkyl group, of which the rings may optionally be attached by —O—, $C_{1-3}$ alkylene or —$SO_2$ bridge members.

6. Polyamide moulding compounds as claimed in at least one of claims 1 to 5, characterized in that the monophenolic compounds used are mono- or poly-$C_{1-12}$-alkyl- and/or -$C_{7-15}$-aralkyl-substituted monophenolic compounds with $C_{10-22}$ which may be substituted at most in one o-position to the OH group or monohydroxydi- or triphenyls optionally substituted by at least one $C_{1-6}$ alkyl group, of which the rings may optionally be substituted by —O—, $C_{1-3}$ alkylene or —$SO_2$ bridge members and which may be substituted at most in one o-position to the OH group.

7. Polyamide moulding compounds as claimed in at least one of claims 1 to 6, characterized in that the amines used include tetrahydronaphthylamines, 2-butylaniline (secondary and tertiary), 4-tert.-butylaniline, 4-tert.-pentylaniline, octylaniline (mixtures), nonylaniline (mixtures), dodecylaniline (mixtures), 4-amindodiphenyl, 2-aminodiphenyl, alkyl-substituted aminodiphenyls, 1-aminonaphthalene, 2-aminonaphthalene, benzylaniline(s), benzyltoludine(s), 2-phenyl-2-(4-aminophenyl)-propane, 4-aminodiphenylsulfone, 4-aminodiphenylether, 2- or 4-cyclohexylanilines, N,N-diphenylamine, N-benzylaniline or mixtures of these compounds or

bis-(4-aminophenyl)-methane, 3-methylbenzidine, 2,2-bis-(4-aminophenyl)-propane 1,1-bis-(4-aminophenyl)-cyclohexane, 1,2-diaminobenzene, 1,4-diaminobenzene, 1,4-diaminonaphthalene, 1,5-diaminonapthalene, 1,3-diaminotoluene(s), N,N-dimethyl-4,4'-biphenyldiamine, bis-(4-methylaminophenyl)-methane, 2,2-bis-(4-methylaminophenyl)-propane or mixtures of these compounds

while the monophenolic compound used include

tetrahdyronaphthol, 2-buutylphenol (secondary and tertiary), 4-t-butylphenol, thymol, 4-tert.-pentylphenol, octylphenol (mixtures), nonylphenol (mixtures), dodecylphenol (mixtures), 4-hydroxydiphenyl, 2-hydroxydiphenol, alkyl-substituted hydroxydiphenyls of the type described in DE-OS 1 943 230, 1-naphthol, 2-naphthol, benzylphenol(s), benzylcresol(s), 2-phenyl-2-(4-hydroxyphenyl)-propane, 4-hydroxydiphenylsulfone, 4-hydroxydiphenylether, 2- or 4- cyclohexylphenols or mixtures of these compounds.

8. Polyamidę moulding compounds as claimed in at least one of claims 1 to 7, characterized in that the amines used include nonylaniline, dodecylaniline, 2-aminobiphenyl, 4-aminodiphenylether, 2- and 4-cyclohexylaniline, N,N-diphenylamine and N-benzylaniline in combination with alkyl-substituted hydroxy-diphenylene, nonylphenol, dodecylphenol, 2-hydroxybiphenol and 2-phenyl-2-(4-hydroxyphenol)-propane.

9. Polyamide moulding compounds as claimed in at least one of claims 1 to 8, characterized in that reinforced polyamide moulding compounds and/or polyamide moulding compounds blended with elasticizing polymers are used.

10. Mouldings of the polyamide moulding compounds claimed in at least one of claims 1 to 9.